# EUROPÄISCHE PATENTSCHRIFT

(11) **EP 3 266 666 B1**
(45) Veröffentlichungstag und Bekanntmachung des Hinweises auf die Patenterteilung: **31.07.2024**
(21) Anmeldenummer: 17177899.6
(22) Anmeldetag: 26.06.2017
(51) Int. Cl.: B60W 10/20, B60W 10/04, B60W 10/18, B60W 50/02, B60W 50/029

(54) **STEUERUNGS-SYSTEM UND VERFAHREN ZUM UNTERSTÜTZEN ODER ERHALTEN EINES SICHEREN LENKBETRIEBS EINES ZUMINDEST TEILAUTONOM FAHRFÄHIGEN KRAFTFAHRZEUGES**
CONTROL SYSTEM AND METHOD FOR SUPPORTING OR MAINTAINING SECURE STEERING OF AN AT LEAST SEMI-AUTONOMOUS MOTOR VEHICLE
SYSTÈME DE COMMANDE ET PROCÉDÉ D'ASSISTANCE OU D'OBTENTION D'UN MÉCANISME DE DIRECTION FIABLE SÛR D'AU MOINS UN VÉHICULE SEMI-AUTONOME

(30) Priorität: 05.07.2016 DE 102016008136
(43) Veröffentlichungstag der Anmeldung: 10.01.2018
(73) Patentinhaber: ZF Active Safety GmbH, 56070 Koblenz (DE)
(72) Erfinder: MEYER, Manfred, 56070 Koblenz (DE)
(74) Vertreter: ZF Friedrichshafen AG

(56) Entgegenhaltungen:
- EP-A1- 0 943 515
- WO-A1-2011/088947
- DE-A1- 10 035 180
- DE-A1- 10 236 330
- DE-A1- 102012 211 901
- DE-A1- 19 632 251
- DE-B4- 10 035 180
- DE-C1- 19 605 553

## Beschreibung

### Hintergrund der Erfindung

Hier werden ein Steuerungs-System und ein Verfahren zum Unterstützen eines sicheren Lenkbetriebs eines Kraftfahrzeuges, insbesondere eines zumindest teilautonom fahrfähigen Kraftfahrzeuges, behandelt. Dieses Steuerungs-System und Verfahren macht sich insbesondere das Vorhandensein einer radindividuellen Bremsansteuerung in Kraftfahrzeugen (KFZ), sowohl in PKW (Personenkraftwagen) als auch in LKW (Lastkraftwagen) zunutze.

### Hintergrund, Stand der Technik

Die Technik autonom fahrfähiger Kraftfahrzeuge entwickelt sich rasant. Schon heute ist eine Vielzahl von Serien-Fahrzeugen mit so genannten "Fahrassistenzsystemen" ausgerüstet. Diese Fahrassistenzsysteme übernehmen verschiedene Aufgaben und sollen dem Fahrer einzelne Tätigkeiten abnehmen oder erleichtern, zum Beispiel Abstandssensoren zur Einhaltung des Sicherheitsabstands zwischen Fahrzeugen, oder in die Fahrzeugführung eingreifende Systeme wie Elektronisch geregeltes Antiblockiersystem (ABS), Elektronisches Stabilitätsprogramm (ESP), Adaptive Cruise Control (ACC), Spurhalteassistent, Einparkhilfe oder Einparkautomatik, etc. Es gibt auch erste voll autonome Fahrzeuge, in denen komplexe Regelsysteme mit aufwendigen Sensoren und Aktoren das Führen des Kraftfahrzeuges komplett übernehmen. Um ihre Aufgaben im Autonomfahrbetrieb zu erfüllen, haben die autonomen Kraftfahrzeuge Aktoren und Sensoren, Hardware und Software sowie eine geeignete Systemarchitektur. Die Aktoren der (teil-)autonomen Fahrzeuge umfassen zum Beispiel eine elektrisch beeinflussbare Fahrzeug-Lenkung, einen Antriebsmaschine und ein Schaltgetriebe. So gibt es zum Beispiel auch herkömmliche Lenkanordnungen mit Lenkrad und Lenkgetriebe, die unabhängig von Lenkradbewegungen durch den Fahrer mittels von der autonomen Fahrzeugregelung angesteuerter elektrischer bzw. hydraulischer Aktoren Lenkbewegungen der Vorderräder bewirken.

Problematisch ist in autonomen Kraftfahrzeugen die Situation, in der ein Fahrer dem Kraftfahrzeug die Kontrolle über das Führen des Kraftfahrzeuges vollständig überlässt. Hier muss der Fahrer seine Hände nicht mehr am Lenkrad bzw. seinen Fuß nicht mehr am Gas- /Bremspedal haben; er hat keinen Einfluss auf die Lenkung oder die Bremse des Kraftfahrzeuges mehr. Vielmehr übergibt der Fahrer in dieser Situation auch die Kontrolle über die Lenkung und die Bremse an die autonome Fahrzeugregelung. Falls nun während eines autonomen Lenkvorgangs der/die Lenkaktor/en oder diesen vorgelagerte Komponenten der autonomen Fahrzeugregelung ausfallen, kann der Fahrer die Kontrolle über die Lenkung nicht immer rechtzeitig (rück-)übernehmen. Bei vollständig autonomen Kraftfahrzeugen ist dies ohnehin ausgeschlossen. Daher ist eine Sicherheitsfunktion für Lenkausfälle in Kraftfahrzeugen sehr wünschenswert.

Die Lenkfähigkeit des autonomen Kraftfahrzeuges stellt eine systemkritische Eigenschaft dar. Deshalb muss hier eine redundante Lösung bereitgestellt werden. Eine naheliegende Lösung wäre eine Verdoppelung der elektrischen bzw. hydraulischen Aktoren und deren Ansteuerung für die Lenkbewegungen zumindest der Vorderräder des Kraftfahrzeuges. Allerdings ist dies eine gewichtstreibende und kostenintensive Realisierung.

Aus dem Dokument DE 10 2012 211 901 A1 ist ein Verfahren zur Spurhalteunterstützung von Kraftfahrzeugen während des Betriebs eines vollautomatischen, zur fahrerunabhängigen Fahrzeugführung ausgebildeten Fahrerassistenzsystems mittels einer Steuereinheit bekannt. Diese Steuereinheit steuert bei einem Ausfall des Lenksystems zur Aufrechterhaltung einer Querführung zur Spurhalteunterstützung des Kraftfahrzeugs ein Bremssystem des Kraftfahrzeugs an.

Das Dokument EP 0 943 515 A1 offenbart ein Verfahren zum Regeln eines Gierverhaltens von Fahrzeugen unter Verwendung eine Lenkreglers und eines Bremsreglers.

Ferner betrifft auch das Dokument WO 2011/088947 A1 ein Verfahren zur Spurhalteunterstützung eines Kraftfahrzeugs durch eine unsymmetrische Momentenverteilung an den Fahrzeugrädern.

Aus der DE 196 32 251 A1 ist eine Vorrichtung zur Lenkung eines Kraftfahrzeuges bekannt, welche im Fehlerfall in Abhängigkeit des Lenksollsignals an den Rädern mit Hilfe einer vorhandenen Bremseinrichtung selektiv unterschiedliche Bremskräfte erzeugt.

### Lösung

Die hier vorgeschlagene Lösung ist in den Ansprüchen 1 und 5 angegeben. Diese sieht in überraschender Abkehr von der obigen Doppel-Lösung vor, zum Beispiel in einer Ausnahmesituation, einen Lenkungsausfall auf eine konzeptionell völlig andere Weise zu kompensieren. Dazu wird in der Fahrzeugsteuerung, wenn ein Ausfall der herkömmlichen Lenkung erkannt wird, aus aktuellen Fahrparametern wie zum Beispiel Fahrzeuggeschwindigkeit, Fahrzeugbeschleunigung, Gierrate, Soll- und Ist-Lenkwinkel, etc. mittels abgestimmter Beschleunigung und/oder Verzögerung jeweiliger einzelner Radantriebe bzw. Radbremsen des Fahrzeugs ein Anstreben einer einem Soll-Lenkwinkel entsprechenden Richtungsänderung des Fahrzeugs bewirkt.

Die vorliegende Lösung implementiert kurz gesagt eine Lenkung durch Beschleunigen als Redundanzarchitektur und ist zum Einsatz in unterschiedlichen Fahrzeugvarianten vorgesehen. Dabei umfasst hier der Begriff "Beschleunigen" sowohl positives Beschleunigen als auch negatives Beschleunigen (=Verzögern).

Diese Lösung macht sich zunutze, dass durch die zunehmende Verbreitung von Electronic Stability Control (ESC) immer mehr Fahrzeuge über Einrichtungen zur Fahrdynamikregelung 30 verfügen. Fahrdynamikregelung bezeichnet ein elektronisch gesteuertes Fahrassistenzsystem für Kraftfahrzeuge, das durch gezieltes Abbremsen bzw. Verzögern einzelner Räder dem Ausbrechen des Wagens entgegenwirkt. ESC ist eine Erweiterung und Verknüpfung des Antiblockiersystems (ABS) mit einer Antriebsschlupfregelung (ASR) und einer Elektronischen Bremskraftverteilung sowie mit einem Bremsassistenten. Bei Elektrofahrzeugen mit radindividuellen elektrischen Antrieben ist darüber hinaus auch ein gezieltes Beschleunigen einzelner Räder möglich.

Einige autonome Fahrzeug-Varianten sind mit keinerlei herkömmlichen Mensch-Maschine-Schnittstellen wie Lenkrad, Gaspedal, Gangwahlhebel, Kupplungspedal, Fahrtrichtungsanzeigehebel, Lichtschalter, etc. ausgestattet. Vielmehr haben Sie lediglich Regeleinrichtungen, Sensoren und Aktoren, um die jeweilige, sonst vom Fahrer ausgeführte Funktion im Fahrbetrieb des KFZ, automatisch zu bewirken. Der Fahrer gibt lediglich das Fahrziel an. Das autonome Fahrzeug ermittelt die Route zum Fahrziel, achtet während der Fahrt auf die Umweltsituation, vermeidet Kollisionen, und trifft auch sämtliche sonstigen, üblicherweise dem Fahrer obliegenden Entscheidungen autonom. Auch für solche autonome Fahrzeug-Varianten ist die vorliegende Lösung geeignet.

In einigen Varianten sind Fahrzeuge sowohl mit herkömmlichen Mensch-Maschine-Schnittstellen ausgestattet, als auch mit entsprechenden Regeleinrichtungen, Sensoren und Aktoren, um die jeweilige, sonst vom Fahrer ausgeführte Funktion automatisch zu bewirken. Hier kann der Fahrer die Wahl haben, in welchem Umfang er sich auf die Autonomfahrfunktion des KFZ verlässt, oder ob er zum Beispiel mit Lenk-, Brems- oder Beschleunigungseingriffen in den Autonomfahrbetrieb des KFZ eingreift. Auch für solche Fahrzeug-Varianten ist die vorliegende Lösung geeignet.

Dabei können beide Fahrzeugvarianten einen Antriebsstrang mit Verbrennungsmaschine, einer oder mehreren elektrischen Maschinen oder Hybridmaschinen haben.

### Kurzbeschreibung der Zeichnung

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Die Abmessungen und Proportionen der in den Fig. gezeigten Komponenten sind hierbei nicht unbedingt maßstäblich; sie können bei zu implementierenden Ausführungsformen vom hier Veranschaulichten abweichen.
Fig. 1 zeigt schematisch ein Teile der Regelungssystemarchitektur eines (teil-)autonomen KFZ.
Fig. 2 zeigt schematisch ein Muster für eine hier vorgestellte Radseitenlenkung nach links.
Fig. 3 zeigt schematisch ein Muster für eine hier vorgestellte Radseitenlenkung nach rechts.

### Detaillierte Beschreibung der Zeichnungen

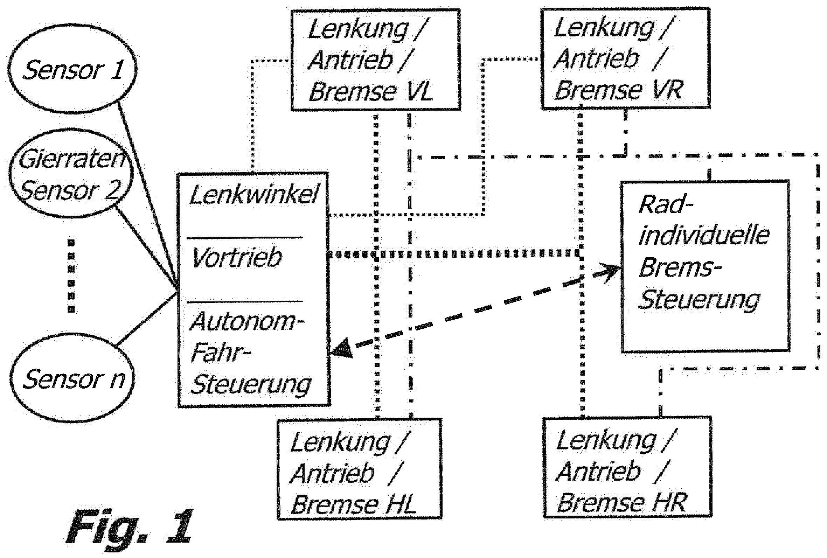

Fig. 1 veranschaulicht schematisch hier interessierende Teile eines Steuerungs-System (Autonom-Fahrsteuerung), das zum Einsatz in einem Kraftfahrzeug eingerichtet und bestimmt ist. Dieses Steuerungs-System hat eine Autonom-Fahr-Steuerung. Diese empfängt aus einem oder mehreren dem Kraftfahrzeug zugeordneten Sensor/en Umfeld-Daten und systeminterne (Sensor-)Daten. Basierend auf diesen Daten wird durch das Steuerungs-System mittels zugeordneter Aktoren (Lenkung, Antriebe, Bremsen, etc.) auf den Fahrbetrieb des Kraftfahrzeuges so eingewirkt, dass ein zumindest teilautonomer Fahrbetrieb bewirkt wird. Dazu kommuniziert die Autonom-Fahr-Steuerung entweder mit den Aktoren (Lenkung, Antriebe, Bremsen, etc.) direkt oder mit einer radindividuellen Brems-Steuerung indirekt. In der gezeigten Anordnung adressiert die Autonom-Fahr-Steuerung die Lenkung der Vorderräder VL, VR und die (elektrischen) Radantriebe direkt. Für radindividuelle Bremseingriffe sendet die Autonom-Fahr-Steuerung entsprechende Befehle an die radindividuellen Brems-Steuerung, welche ihrerseits die jeweiligen Räder VL, VR, HL, HR individuell ansteuert.

Im ungestörten Betrieb ist das Steuerungs-System in der Lage, aus den Umfeld-Sensor-Daten und den systeminternen Sensor-Daten Aktorsignale (Lenkwinkel, Vortrieb) für den autonomen Betrieb des Kraftfahrzeuges zu erzeugen. Das Steuerungs-System ist außerdem in der Lage, aus den Umfeld-Sensor-Daten und den systeminternen Sensor-Daten ein Ausfall einer herkömmlichen Lenkung des Kraftfahrzeuges zu erkennen. Dies ist dadurch möglich, dass ein vorgegebenes Lenkwinkelsignal nicht zu einer Rotation des Kraftfahrzeuges um seine Hochachse korrespondiert, wobei die Rotation mit einem Signal aus einem Gierratensensor ermittelt wird. Dies kann die Systemsteuerung durch Vergleich feststellen.

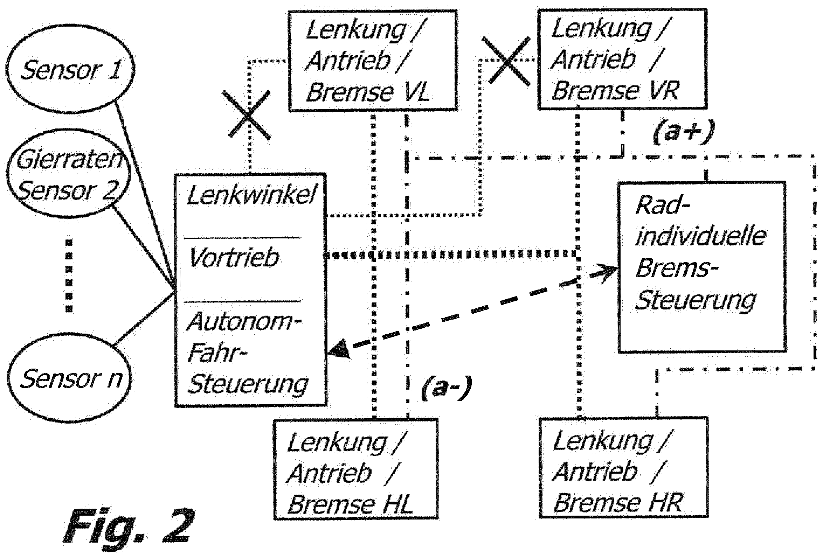

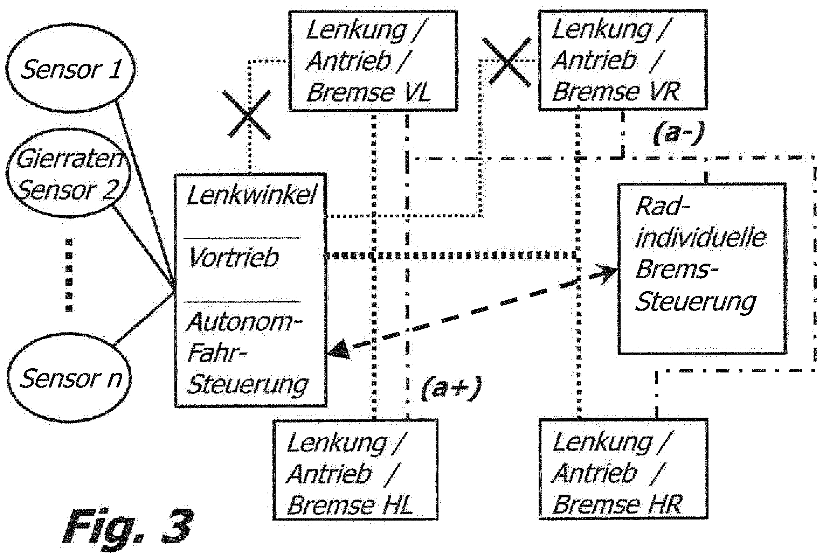

Bei Vorliegen dieser Ausnahmesituation - dargestellt in Fig. 2 und 3 mittels unterbrochener Verbindungen zwischen Autonom-Fahr-Steuerung und den Lenkaktoren, die die Lenkwinkel der Vorderräder einstellen - ist das Steuerungs-System in der Lage, aus aktuellen Fahrparametern mittels abgestimmter Beschleunigungs- und/oder Verzögerungs-Eingriffe einzelner Radantriebe bzw. Radbremsen des Fahrzeugs ein Anstreben einer einem Soll-Lenkwinkel entsprechenden Richtungsänderung des Fahrzeugs zu bewirken.

Für die abgestimmten Beschleunigungs- und/oder Verzögerungs-Eingriffe einzelner Radantriebe bzw. Radbremsen des Fahrzeugs bedient sich das Steuerungs-System in einer Lösungsvariante der im Fahrzeug (ohnehin) vorhandenen Fahrdynamikregelung. Dazu kann die Autonom-Fahrsteuerung zum Beispiel mit der radindividuellen Brems-Steuerung der Fahrdynamikregelung kommunizieren und entsprechende Befehle übermitteln. Das Ergebnis der Verzögerungs-Eingriffe kann die Autonom-Fahrsteuerung zum Beispiel wieder mit dem Gierratensensor überprüfen und nachregeln.

Ausgewertete Fahrparameter umfassen in einigen Lösungsvarianten: Fahrzeuggeschwindigkeit, Fahrzeugbeschleunigung, Gierrate des Fahrzeugs, Soll- und Ist-Lenkwinkel, Drehzahl einzelner Räder des Fahrzeugs, Schlupfzustand einzelner Räder des Fahrzeugs gegenüber dem Untergrund.

Dabei bewirkt das Steuerungs-System die abgestimmten Beschleunigungs- und/oder Verzögerungs-Eingriffe derart, dass für eine gewünschte Richtungsänderung des Fahrzeugs nach links ein linkes Hinterrad des Fahrzeugs durch Aufbringen eines Bremsmomentes ***a-***verzögert und - sofern möglich - ein rechtes Vorderrad des Fahrzeugs durch Aufbringen eines Beschleunigungsmomentes ***a+*** beschleunigt wird. Dabei ist eine individuelle Beschleunigung eines (Vorder-)Rades des Fahrzeugs in der Regel nur bei (teil-)elektrischen Fahrzeugen möglich, die über radindividuelle elektrische Antriebs-Maschinen verfügen (Fig. 2). Analog wird durch das Steuerungs-System eine Richtungsänderung des Fahrzeugs nach rechts dadurch bewirkt, dass ein rechtes Hinterrad des durch Aufbringen eines Bremsmomentes ***a-*** verzögert und - sofern möglich - und/oder ein linkes Vorderrad des Fahrzeugs durch Aufbringen eines Beschleunigungsmomentes ***a+*** beschleunigt wird (Fig. 3).

Die in den Fig. veranschaulichte Systemarchitektur, bei der die diversen miteinander in Kommunikation stehenden Komponenten direkt miteinander verbunden sind, ist nicht zwingend; die Komponenten können auch durch einen Datenbus miteinander kommunizieren.

Die vorangehend beschriebenen Varianten sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

## Patentansprüche

1. Steuerungs-System, das zum Einsatz in einem Kraftfahrzeug eingerichtet und bestimmt ist, basierend auf aus einem oder mehreren dem Kraftfahrzeug zugeordneten Sensor/en gewonnenen Umfelddaten und systeminternen Sensordaten mittels zugeordneter Aktoren einen zumindest teilautonomen Fahrbetrieb des Kraftfahrzeuges zu bewirken, wobei das Steuerungs-System dazu eingerichtet und bestimmt ist, einen Ausfall einer herkömmlichen Lenkung des Kraftfahrzeugs zu erkennen, und aus aktuellen Fahrparametern mittels abgestimmter Beschleunigungs- und/oder Verzögerungs-Eingriffe einzelner Radantriebe bzw. Radbremsen des Fahrzeugs ein Anstreben einer einem Soll-Lenkwinkel entsprechenden Richtungsänderung des Fahrzeugs zu bewirken, wobei das Steuerungs-System ferner dazu eingerichtet und bestimmt ist, sich für die abgestimmten Beschleunigungs- und/oder Verzögerungs-Eingriffe einer im Kraftfahrzeug vorhandenen Fahrdynamikregelung zu bedienen,
**dadurch gekennzeichnet, dass** der Ausfall der herkömmlichen Lenkung des Kraftfahrzeugs anhand eines Vergleichs zwischen einem vorgegebenen Lenkwinkelsignal und einer Rotation des Kraftfahrzeugs um seine Hochachse erkannt wird.

2. Steuerungs-System nach Anspruch 1, bei dem die Fahrparameter eine oder mehrere der Größen: Fahrzeuggeschwindigkeit, Fahrzeugbeschleunigung, Gierrate des Fahrzeugs, Soll- und Ist-Lenkwinkel, Drehzahl einzelner Räder des Fahrzeugs, Schlupfzustand einzelner Räder des Fahrzeugs gegenüber dem Untergrund, umfassen.

3. Steuerungs-System nach Anspruch 1 oder 2, bei dem das Steuerungs-System dazu eingerichtet und bestimmt ist, die abgestimmten Beschleunigungs- und/oder Verzögerungs-Eingriffe derart zu bewirken, dass zum Bewirken einer Richtungsänderung des Fahrzeugs nach links ein linkes Hinterrad des Fahrzeugs verzögert und/oder ein rechtes Vorderrad des Fahrzeugs beschleunigt wird.

4. Steuerungs-System nach Anspruch 1 oder 2, bei dem zum das Steuerungs-System dazu eingerichtet und bestimmt ist, die abgestimmten Beschleunigungs- und/oder Verzögerungs-Eingriffe derart zu bewirken, dass zum Bewirken einer Richtungsänderung des Fahrzeugs nach rechts ein rechtes Hinterrad des Fahrzeugs verzögert und/oder ein linkes Vorderrad des Fahrzeugs beschleunigt wird.

5. Verfahren zum Bewirken eines zumindest teilautonomen Fahrbetriebes eines Kraftfahrzeuges basierend auf aus einem oder mehreren dem Kraftfahrzeug zugeordneten Umfeldsensor/en gewonnenen Umfelddaten mittels einer elektronischen Steuerung und mittels der Steuerung des Kraftfahrzeuges nachgeordneten Aktoren, wobei das Erkennen des Vorliegens einer Ausnahmesituation wegen eines zumindest teilweisen Ausfalls von Komponenten einer Lenkung des Kraftfahrzeuges erfolgt, und aus aktuellen Fahrparametern mittels abgestimmter Beschleunigungs- und/oder Verzögerungs-Eingriffe an einzelnen Radantrieben bzw. Radbremsen des Fahrzeugs ein Anstreben einer einem Soll-Lenkwinkel entsprechenden Richtungsänderung des Fahrzeugs bewirkt wird, wobei sich das Steuerungs-System für die abgestimmten Beschleunigungs- und/oder Verzögerungs-Eingriffe einer im Kraftfahrzeug vorhandenen Fahrdynamikregelung bedient, **dadurch gekennzeichnet, dass** das Erkennen des Vorliegens einer Ausnahmesituation wegen eines zumindest teilweisen Ausfalls von Komponenten einer Lenkung des Kraftfahrzeuges anhand eines Vergleichs zwischen einem vorgegebenen Lenkwinkelsignal und einer Rotation des Kraftfahrzeugs um seine Hochachse erkannt wird.

6. Verfahren nach Anspruch 5, bei dem als Fahrparameter eine oder mehrere der Größen: Fahrzeuggeschwindigkeit, Fahrzeugbeschleunigung, Gierrate des Fahrzeugs, Soll- und Ist-Lenkwinkel, Drehzahl einzelner Räder des Fahrzeugs, Schlupfzustand einzelner Räder des Fahrzeugs gegenüber dem Untergrund, ausgewertet werden.

7. Verfahren nach Anspruch 5 oder 6, bei dem die abgestimmten Beschleunigungs- und/oder Verzögerungs-Eingriffe derart bewirkt werden, dass für eine Richtungsänderung des Fahrzeugs nach links ein linkes Hinterrad des Fahrzeugs verzögert und/oder ein rechtes Vorderrad des Fahrzeugs beschleunigt wird.

8. Verfahren nach Anspruch 5 oder 6, bei dem die abgestimmten Beschleunigungs- und/oder Verzögerungs-Eingriffe derart bewirkt werden, dass für eine Richtungsänderung des Fahrzeugs nach rechts ein rechtes Hinterrad des Fahrzeugs verzögert und/oder ein linkes Vorderrad des Fahrzeugs beschleunigt wird.

## Claims

1. Control system which is designed for use in a motor vehicle and is intended to implement at least partially autonomous driving operation of the motor vehicle based on environmental data obtained from one or more sensors associated with the motor vehicle and system-internal sensor data by means of associated actuators, wherein the control system is designed and intended to identify failure of a conventional steering system of the motor vehicle and to implement an attempt to change the direction of the vehicle, the change in direction corresponding to a target steering angle, from current driving parameters by means of coordinated acceleration and/or deceleration interventions in individual wheel drives or wheel brakes of the vehicle, wherein the control system is further designed and intended to provide for the coordinated acceleration and/or deceleration interventions in a vehicle dynamics control system present in the motor vehicle, **characterized in that** the failure of the conventional steering system of the motor vehicle is identified on the basis of a comparison between a specified steering angle signal and a rotation of the motor vehicle about its vertical axis.

2. Control system according to Claim 1, in which the driving parameters comprise one or more of the variables: vehicle speed, vehicle acceleration, yaw rate of the vehicle, target and actual steering angles, rotation speed of individual wheels of the vehicle, slip state of individual wheels of the vehicle with respect to the underlying surface.

3. Control system according to Claim 1 or 2, in which the control system is designed and intended to implement the coordinated acceleration and/or deceleration interventions in such a way that a left-hand-side rear wheel of the vehicle is decelerated and/or a right-hand-side front wheel of the vehicle is accelerated in order to implement a change in direction of the vehicle to the left.

4. Control system according to Claim 1 or 2, in which the control system is designed and intended to implement the coordinated acceleration and/or deceleration interventions in such a way that a right-hand-side rear wheel of the vehicle is decelerated and/or a left-hand-side front wheel of the vehicle is accelerated in order to implement a change in direction of the vehicle to the right.

5. Method for implementing at least partially autonomous driving operation of a motor vehicle based on environmental data obtained from one or more environment sensors associated with the motor vehicle by means of an electronic controller and by means of actuators arranged downstream of the motor vehicle controller, wherein the presence of an exceptional situation due to an at least partial failure of components of a steering system of the motor vehicle is identified, and an attempt to change the direction of the vehicle, the change in direction corresponding to a target steering angle, is implemented from current driving parameters by means of coordinated acceleration and/or deceleration interventions on individual wheel drives or wheel brakes of the vehicle, wherein the control system provides for the coordinated acceleration and/or deceleration interventions in a vehicle dynamics control system present in the motor vehicle, **characterized in that** identifying the presence of an exceptional situation due to an at least partial failure of components of a steering system of the motor vehicle is identified on the basis of a comparison between a specified steering angle signal and a rotation of the motor vehicle about its vertical axis.

6. Method according to Claim 5, in which one or more of the variables: vehicle speed, vehicle acceleration, yaw rate of the vehicle, target and actual steering angles, rotation speed of individual wheels of the vehicle, slip state of individual wheels of the vehicle with respect to the underlying surface is/are evaluated as driving parameters.

7. Method according to Claim 5 or 6, in which the coordinated acceleration and/or deceleration interventions are implemented in such a way that a left-hand-side rear wheel of the vehicle is decelerated and/or a right-hand-side front wheel of the vehicle is accelerated for a change in direction of the vehicle to the left.

8. Method according to Claim 5 or 6, in which the coordinated acceleration and/or deceleration interventions are implemented in such a way that a right-hand-side rear wheel of the vehicle is decelerated and/or a left-hand-side front wheel of the vehicle is accelerated for a change in direction of the vehicle to the right.

## Revendications

1. Système de commande qui est conçu pour être utilisé dans un véhicule automobile et qui est destiné à assurer un fonctionnement de conduite au moins partiellement autonome du véhicule automobile sur la base de données d'environnement, obtenues d'un ou plusieurs capteurs associés au véhicule automobile, et de données de capteur internes au système au moyen d'actionneurs associés, le système de commande étant conçu pour, et destiné à, détecter une défaillance d'une direction classique du véhicule automobile et un changement de direction du véhicule correspondant à un angle de braquage cible étant souhaité à partir de paramètres de conduite actuels au moyen d'interventions coordonnées d'accélération et/ou de décélération d'entraînements de roues resp. de freins de roues individuels du véhicule, le système de commande étant en outre conçu pour, et destiné à, utiliser une régulation de dynamique de véhicule présent dans le véhicule automobile pour les interventions coordonnées d'accélération et/ou de décélération, **caractérisé en ce que** la défaillance de la direction classique du véhicule automobile est détectée sur la base d'une comparaison entre un signal d'angle de braquage spécifié et une rotation du véhicule automobile sur son axe vertical.

2. Système de commande selon la revendication 1, dans lequel les paramètres de conduite comprennent une ou plusieurs des grandeurs suivantes : vitesse du véhicule, accélération du véhicule, taux de lacet du véhicule, angle de braquage cible et réel, vitesse de rotation de roues individuelles du véhicule, état de patinage de roues individuelles du véhicule par rapport au sol.

3. Système de commande selon la revendication 1 ou 2, dans lequel le système de commande est conçu pour, et destiné à, effectuer les interventions coordonnées d'accélération et/ou de décélération de telle sorte que, pour effectuer un changement de direction du véhicule vers la gauche, une roue arrière gauche du véhicule est décélérée et/ou une roue avant droite du véhicule est accélérée.

4. Système de commande selon la revendication 1 ou 2, dans lequel le système de commande est conçu pour, et destiné à, effectuer les interventions coordonnées d'accélération et/ou de décélération de telle sorte que, pour effectuer un changement de direction du véhicule vers la droite, une roue arrière droite du véhicule est décélérée et/ou une roue avant gauche du véhicule est accélérée.

5. Procédé permettant d'effectuer un fonctionnement de conduit au moins partiellement autonome d'un véhicule automobile sur la base de données d'environnement, obtenues à partir d'un ou plusieurs capteurs d'environnement associés au véhicule automobile, au moyen d'une commande électronique et au moyen d'actionneurs disposés en aval de la commande du véhicule automobile, la détection de l'existence d'une situation exceptionnelle étant effectuée en raison d'une défaillance au moins partielle de composants d'une direction du véhicule automobile, et un changement de direction du véhicule correspondant à un angle de braquage cible étant souhaité à partir de paramètres de conduite actuels au moyen d'interventions coordonnées d'accélération et/ou de décélération d'entraînements de roues resp. de freins de roues individuels du véhicule, le système de commande des interventions coordonnées d'accélération et/ou de décélération utilisant une régulation de dynamique de véhicule présente dans le véhicule automobile, **caractérisé en ce que** la détection de l'existence d'une situation exceptionnelle due à une défaillance au moins partielle de composants d'un système de direction du véhicule automobile est détectée sur la base d'une comparaison entre un signal d'angle de braquage spécifié et une rotation du véhicule automobile sur son axe vertical.

6. Procédé selon la revendication 5, dans lequel une ou plusieurs des grandeurs suivantes : vitesse du véhicule, accélération du véhicule, taux de lacet du véhicule, angle de braquage cible et réel, vitesse de rotation de roues individuelles du véhicule, état de patinage de roues individuelles du véhicule par rapport au sol sont évaluées comme paramètres de conduite.

7. Procédé selon la revendication 5 ou 6, dans lequel les interventions coordonnées d'accélération et/ou de décélération sont effectuées de telle sorte que, pour effectuer un changement de direction du véhicule vers la gauche, une roue arrière gauche du véhicule soit décélérée et/ou une roue avant droite du véhicule soit accélérée.

8. Procédé selon la revendication 5 ou 6, dans lequel les interventions coordonnées d'accélération et/ou de décélération sont effectuées de telle sorte que, pour effectuer un changement de direction du véhicule vers la droite, une roue arrière droite du véhicule soit décélérée et/ou une roue avant gauche du véhicule soit accélérée.
